# FASCICULE DE BREVET EUROPEEN

(11) **EP 1 834 469 B1**
(45) Date de publication et mention de la délivrance du brevet: **12.10.2011**
(21) Numéro de dépôt: 06709040.7
(22) Date de dépôt: 06.01.2006
(51) Int. Cl.: H04L 29/06, H04L 12/28, G06F 9/445

(54) **Dispositif de connexion automatique au réseau Internet**
Vorrichtung für eine automatische Internetverbindung
Automatic internet connection device

(30) Priorité: 06.01.2005 FR 0500121
(43) Date de publication de la demande: 19.09.2007
(73) Titulaire: Smartcom, 06410 Biot (FR)
(72) Inventeur: AZULAY ROGER, Colette, Abigael, 06400 Cannes (FR); ROGER, Julien, 06600 Antibes (FR); MARTINEZ, David, 06600 Antibes (FR)
(74) Mandataire: Bonneau, Gérard
(86) Numéro de dépôt international: PCT/FR2006/000023
(87) Numéro de publication internationale: WO 2006/072747

(56) Documents cités:
- EP-A- 1 434 128
- US-A1- 2003 046 447
- US-A1- 2005 080 973
- US-B1- 6 704 824
- DUPUY P: "L'étonnante success story de Smartcom" NICE-MATIN, [Online] 23 mars 2004 (2004-03-23), page 1, XP002343546 Extrait de l'Internet: URL:http://www.wellphone.com/pdf/fr/nicema tin_23-03-2004.PDF> [extrait le 2005-09-05]
- SMARTCOM: "Wellphone PC All Windows PC Systems" SPECIFICATIONS SHEET, [Online] 16 octobre 2004 (2004-10-16), pages 1-2, XP002379114 Internet Archive Extrait de l'Internet: URL:http://web.archive.org/web/20041016155 734/www.wellphone.com/en/prod/default.asp> [extrait le 2005-04-26]
- MICROSOFT: "USB Storage - FAQ for Driver and Hardware Developers"[Online] 28 octobre 2004 (2004-10-28), pages 1-6, XP002343547 Extrait de l'Internet: URL:http://www.microsoft.com/whdc/device/s torage/usbfaq.mspx?pf=true> [extrait le 2005-09-05]
- FRAMASOFT: "Portable Firefox et Portable Thunderbird"[Online] 3 octobre 2004 (2004-10-03), pages 1-3, XP002343548 Extrait de l'Internet: URL:http://www.framasoft.net/article3406.h tml> [extrait le 2005-09-06]

## Description

### Domaine technique

La présente invention concerne les systèmes de transmission de données dans lesquels un utilisateur disposant d'un ordinateur hôte désire échanger des données avec un autre utilisateur disposant d'un ordinateur hôte connecté au réseau Internet, et concerne en particulier un dispositif de connexion automatique au réseau Internet dans un tel système.

### Etat de la technique

Aujourd'hui, lorsqu'un utilisateur itinérant du réseau Internet désire échanger des données avec un autre utilisateur, la technique moderne lui permet de mettre en oeuvre un certain nombre de moyens. Parmi ceux-ci, le téléphone mobile présente l'avantage d'être peu encombrant et de pouvoir accéder au réseau Internet à partir quasiment de n'importe quel lieu. En effet, le téléphone mobile devient de plus en plus sophistiqué et est équipé maintenant de fonctionnalités multimédia telles qu'une caméra capable d'enregistrer aussi bien des photos que des films.

En conséquence, le téléphone mobile doit disposer d'un outil qui est un logiciel spécifique permettant de gérer le contenu de chaque fonctionnalité, que ce contenu soit un SMS, un EMS, une sonnerie, une mélodie, un nom de contact et son numéro, un contact complet (nom, prénom, adresse, e-mail, numéro de mobile, numéro de téléphone fixe, numéro de travail) un film, une image, etc. Cet outil est parfois fourni par le fabricant du mobile. Mais les outils sont tous différents les uns des autres et même, au sein d'une même marque, différents d'un modèle de mobile à l'autre.

L'utilisateur bénéficiant d'un de ces outils (souvent livré avec le mobile) a énormément de mal, lorsqu'il change de mobile, à continuer de l'utiliser. Il lui est bien souvent carrément impossible de continuer avec le même logiciel et il doit changer d'outil avec toutes les incompatibilités et contraintes liées à l'opération de transfert de ses données que cela entraîne.

Les systèmes d'exploitation, nombreux et en perpétuelle évolution, sont également une source de soucis pour les utilisateurs de ces outils qui doivent constamment veiller à ce que leurs pilotes, version de l'outil et « firmware » soient à jour, et ce, afin de garantir l'utilisation de toutes les fonctions fournies par l'outil. US 6,704,824 divulgue un procédé pour l'installation automatique des pilotes.

Une autre solution consiste à utiliser des clés mémoires, aussi appelées clés USB ou sticks mémoires qui constituent, du fait de leur capacité croissante, une solution idéale pour transporter un ou plusieurs éléments, multimédia ou pas d'un ordinateur à un autre, voire même, pour les plus avancés des utilisateurs, d'un endroit à un autre. Cette utilisation croissante des mémoires de ce type qui tiennent facilement dans la poche, pousse les fabricants de mobiles à inclure une plus grande capacité mémoire dans certains de leurs modèles et à les équiper de moyens de communication de plus en plus évolués pour communiquer avec l'ordinateur.

Cependant, l'utilisateur itinérant souhaite resté joignable en toutes circonstances. Le fait de connecter son téléphone mobile à son PC pour les opérations de synchronisation et de gestion du contenu de son mobile, ne doit pas l'empêcher de pouvoir prendre un appel sans complication. De plus le mobile lui-même ne doit pas être mobilisé par le logiciel afin que l'utilisateur, s'il le souhaite, puisse l'utiliser pour un simple appel à tout moment.

Une solution a été proposée par la société Handspring qui a commercialisé un assistant personnel (PDA) intégrant les fonctions de téléphonie et de modem en plus des éléments de mémoire déjà disponibles dans les modèles non communicants de ces appareils. Cette solution très conviviale reste très onéreuse et représente souvent un doublon fonctionnel par rapport à l'ordinateur portable dont la personne itinérante est très souvent équipée. Les utilisateurs hésitent alors à sauter le pas et à acquérir de tels PDA.

Il y a donc actuellement un besoin d'un moyen qui offre à un usager itinérant possédant un ordinateur de disposer des avantages combinés d'une clé mémoire USB pour stocker ses données, d'un modem haut débit pour pouvoir communiquer au moyen d'un réseau téléphonique et d'un téléphone mobile sophistiqué, tout en n'ayant qu'à se connecter physiquement au réseau téléphonique.

### Exposé de l'invention

C'est pourquoi le but de l'invention est de fournir un dispositif permettant à tout utilisateur d'un ordinateur hôte de se connecter automatiquement à un réseau local, que ce soit un réseau cellulaire, un réseau WiFi ou un réseau LAN, dans le but d'échanger des données avec un autre ordinateur hôte connecté au réseau Internet

L'objet de l'invention est donc un dispositif selon la revendication 1.

### Description brève des figures

Les buts, objets et caractéristiques de l'invention apparaîtront plus clairement à la lecture de la description qui suit faite en référence aux dessins dans lesquels :
la figure 1 est un bloc-diagramme représentant un système de transmission de données dans lequel un dispositif selon l'invention est mis en oeuvre ;
les figures 2A et 2B représentent respectivement un premier et un second modes de réalisation du boîtier constituant le dispositif selon l'invention ; et
les figures 3A, 3B et 3C représentent ensemble un organigramme des étapes du procédé de fonctionnement du dispositif selon l'invention.

### Description détaillée de l'invention

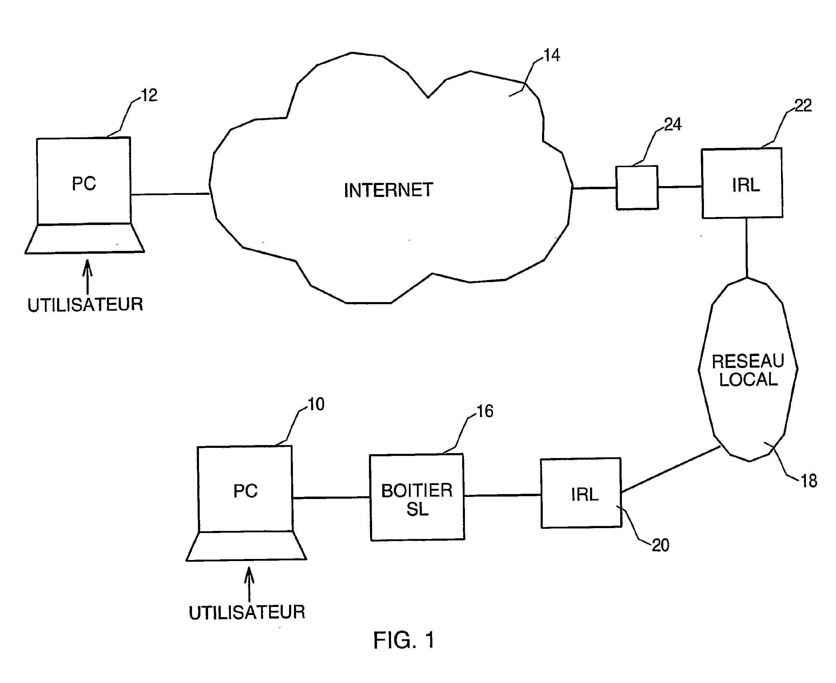

Il est fait d'abord référence à la figure 1 qui illustre un système dans lequel le dispositif selon l'invention est implémenté. On suppose qu'un premier utilisateur du type itinérant dispose d'un ordinateur hôte 10 au moyen duquel il veut échanger des données avec un deuxième utilisateur disposant également d'un ordinateur hôte 12 connecté au réseau Internet 14. Le premier utilisateur pourrait être un agent commercial en dehors de son entreprise désirant communiquer avec une autre personne située dans l'entreprise.

Le premier utilisateur a à sa disposition un dispositif selon l'invention qui se présente sous forme d'un boîtier 16 nommé « SeamlessKey » (SL). Comme on le verra par la suite, ce boîtier comporte une prise mâle USB qui doit être connectée à une prise femelle USB de l'ordinateur 10 pour pouvoir être utilisé.

Comme décrit ci-dessous, le boîtier SL 16 comprend un logiciel de connexion adapté pour réaliser la connexion automatique à un réseau local 18 par l'intermédiaire d'un dispositif d'interface réseau local (IRL) 20 tel qu'une carte d'interface. Le réseau local 18 est connecté par l'intermédiaire d'un autre dispositif réseau local 22 tel qu'une carte d'interface, et d'une passerelle 24 au réseau Internet. Comme on le verra par la suite, le dispositif IRL 20 peut être intégré dans le boîtier 16.

La simple connexion physique du boîtier SL 16 à l'ordinateur 10 permet au premier utilisateur d'être relié automatiquement au réseau Internet 14 et donc de pouvoir échanger des données avec le deuxième ordinateur immédiatement sans intervention de l'utilisateur. La connexion à la prise USB de l'ordinateur permet au système d'exploitation de l'ordinateur de démarrer automatiquement la ou les applications présentes dans le dispositif lors de l'insertion de la prise USB.

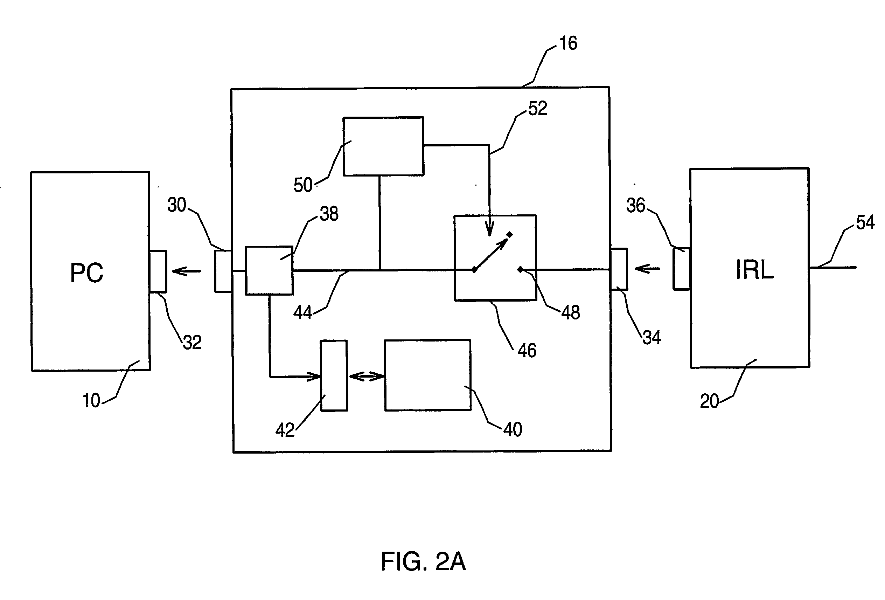

Selon un premier mode de réalisation illustré sur la figure 2A, le boîtier 16 comprend un prise mâle USB 30 qui s'enfiche dans une prise femelle USB 32 de l'ordinateur 10. et de l'autre côté, une prise femelle 34 dans laquelle vient s'enficher la prise USB mâle 36 du dispositif IRL 20. La connexion de ce dernier se fait en même temps ou juste avant la connexion du boîtier 16 à l'ordinateur hôte 10. le dispositif IRL 20 est connecté par sa ligne de sortie 54 au réseau local 18 (voir figure 1). A noter que les prises USB pourraient être remplacées par tout autres moyens de connexion remplissant les mêmes fonctions que les prises USB.

Le boîtier 16 comprend un concentrateur 38 (connu sous le nom de « hub ») rendant visibles les dispositifs périphériques qui lui sont associés. La mémoire de masse 40 est directement connectée au concentrateur 38 par l'intermédiaire du contrôleur de mémoire 42. La mémoire de masse 40 de grande capacité contient les logiciels utilitaires (drivers) associés au dispositif IRL 20 ainsi que les données utilisateur telles que les données de configuration et, de façon générale, tous les paramètres nécessaires au fonctionnement du boîtier. A noter que la mémoire de masse 40 peut contenir des logiciels utilitaires et données associées.

La ligne de sortie 44 du concentrateur 38 est la ligne d'entrée d'un commutateur 46 à une seule position de sortie 48. Au repos, la sortie du commutateur est déconnectée, c'est-à-dire que la liaison entre le concentrateur 38 et le dispositif IRL 20 n'est pas établie.

Un moyen d'activation 50 relié en permanence à la ligne 44 commande l'activation du commutateur 46 par une sortie de commande 52 lorsqu'il reçoit une instruction lui demandant de procéder à l'activation. Dans ce cas, le commutateur 46 se met sur la position 48, ce qui rend visible le dispositif IRL 20 à l'ordinateur 10.

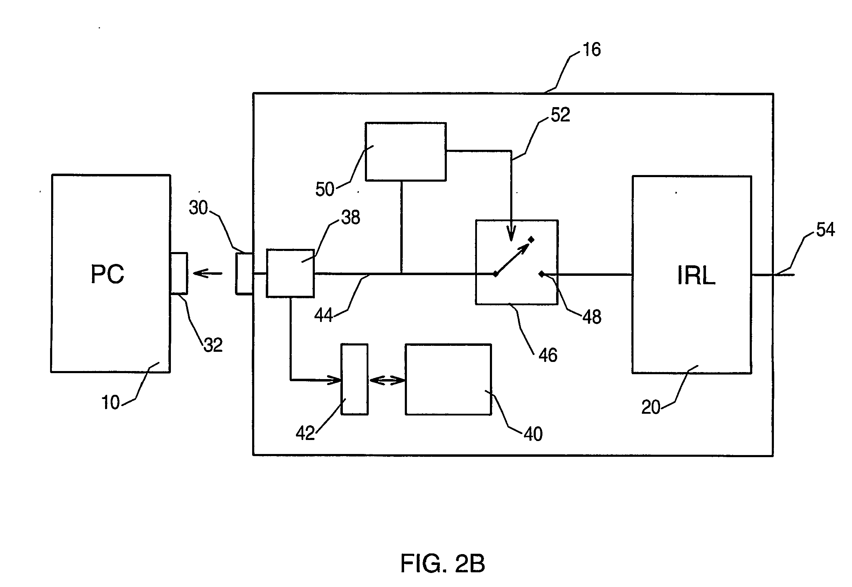

Selon un second mode de réalisation illustré sur la figure 2B, le boîtier 16 comprend les mêmes éléments que le boîtier illustré sur la figure 2A excepté que le dispositif IRL 20 est intégré dans le boîtier. Dans ce cas, le boîtier 16 doit être connecté par sa ligne de sortie 54 au réseau local 18 (voir figure 1), soit en même temps, soit juste avant la connexion du boîtier 16 à l'ordinateur hôte 10.

Les moyens logiciels se trouvant dans la mémoire de masse 40 du boîtier 16 détectent et reconnaissent automatiquement l'environnement de fonctionnement dans lequel se trouve le boîtier. Cela inclut le système d'exploitation de l'ordinateur, le lien le rattachant à d'autres entités de communication lorsque cela est le cas, la langue de fonctionnement, le réseau de télécommunication utilisé et les cartes d'interface réseau local disponibles.

En outre, le boîtier SL 16 comporte de préférence un outil logiciel lui permettant de se connecter automatiquement à un réseau local (le réseau local 18) parmi plusieurs réseaux locaux possibles. Ainsi, le réseau local 18 peut être un réseau LAN ou un réseau sans fil. Dans ce deuxième cas, le réseau local peut être un réseau WiFi ou un réseau téléphonique cellulaire GPRS/GSM, EDGE, CDMA ou UMTS. A noter que dans le cas d'un réseau cellulaire, le dispositif IRL 20 (ainsi que le dispositif 22) est un modem sans fil donc sans ligne de sortie 54 physique.

A noter qu'on peut prévoir une mise à jour à distance du boîtier permettant de modifier la configuration et les paramètres du boîtier. Cela permet à un administrateur système de pouvoir changer le comportement du boîtier à volonté. En envoyant des fichiers de configuration et de paramètres différents, l'administrateur système peut faire en sorte que le boîtier n'accepte plus la connexion sans fil qu'avec un seul opérateur ou bien qu'un seul dispositif IRL (20) déterminé soit accepté pour établir la connexion. L'administrateur système peut également déterminer si la mise à jours doit avoir lieu et si oui quelle est la mise à jours autorisée.

La mémoire de masse 40 du boîtier 16 d'une capacité d'au moins 128 mégaoctets, contient les fonctionnalités de gestion du contenu du mobile suivantes ou fonctions multimédia : gestion des SMS et des EMS, gestion des MMS, gestion des sonneries et mélodies, gestion des images fixes et vidéos et gestion de tous autres fichiers.

A noter que le boîtier SL 16 peut être identifié mondialement de façon unique grâce à un numéro IMEI (International Mobile Equipment Identifier). Cette identification permet entre autres, la mise en place de services ciblés. Cela se fait en associant le boîtier aux données utilisateurs de son possesseur, données fournies par l'utilisateur lui-même auprès de son fournisseur de service de téléphonie mobile ou de WiFi et utilisées avec son accord.

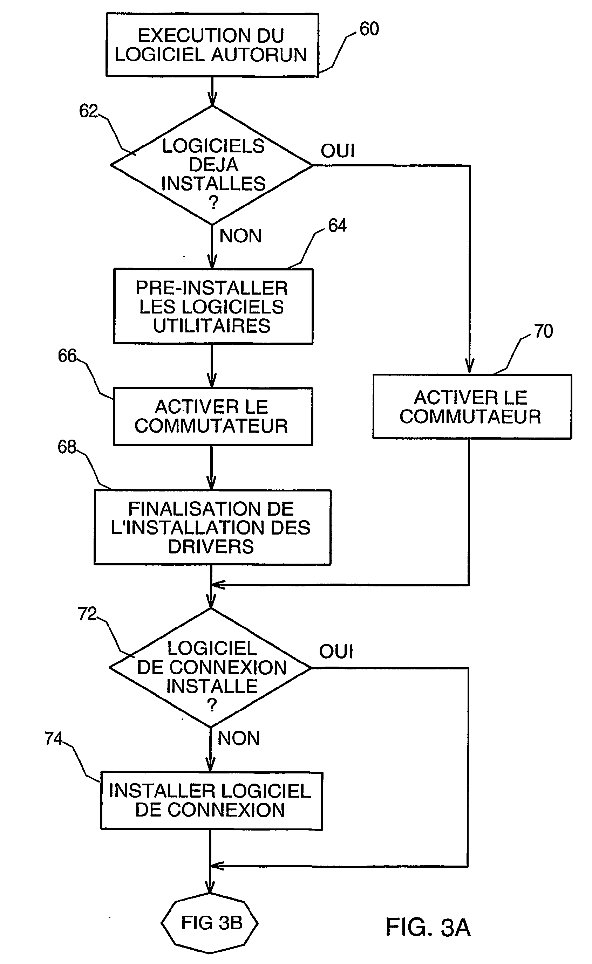

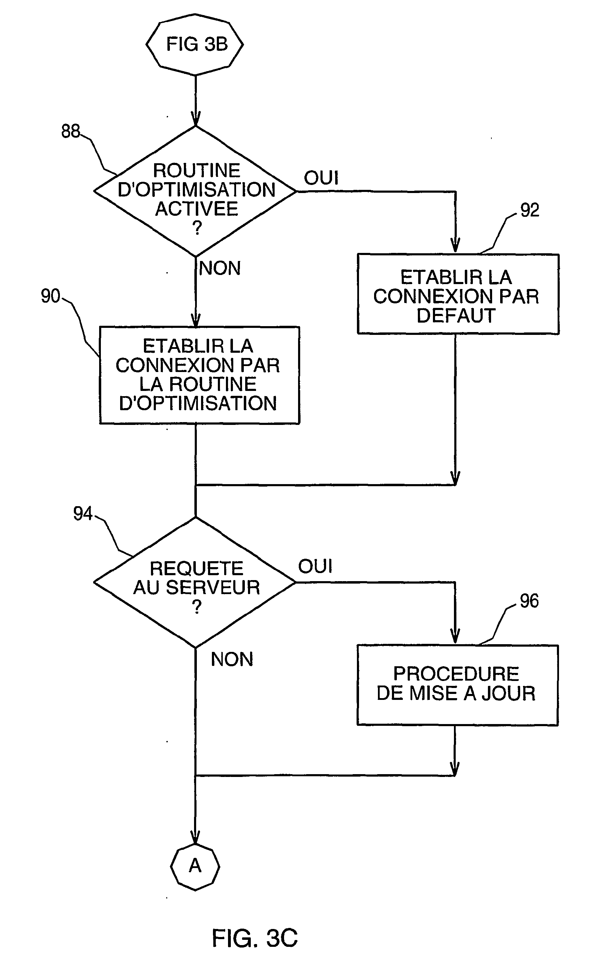

Les étapes illustrées par l'organigramme des figures 3A 3B et 3C ont ensuite lieu. Lorsque la prise USB du boîtier SL 16 est insérée dans l'ordinateur 10, une des caractéristiques essentielles de l'invention est que le boîtier contient un logiciel de déclaration (ou d'identification) qui lui permet d'être reconnu par le système d'exploitation de l'ordinateur comme étant un CD ROM. Immédiatement, le système d'exploitation recherche dans le boîtier SL un fichier auto exécutable « autorun.inf » et exécute (étape 60) les instructions qu'il contient, c'est-à-dire les instructions d'installation du logiciel de connexion, des divers pilotes et de façon générale de toutes les autres fonctions contenues dans le boîtier SL.

A ce stade, la procédure est différente selon qu'il s'agit d'une première installation du boîtier SL ou non. La procédure détermine si les logiciels utilitaires sont déjà installés (étape 62). Si c'est une première installation, le système d'exploitation de l'ordinateur procède à la pré-installation des pilotes ou logiciels utilitaires stockés dans la mémoire de masse 40 du boîtier (étape 64).

Après la pré-installation, une instruction envoyée au moyen d'activation 50 du boîtier 16 entraîne l'activation du commutateur 46 (étape 66). A ce stade, le dispositif IRL 20 est connecté à l'ordinateur 10 par le commutateur 46. Le système d'exploitation de l'ordinateur peut alors finaliser l'installation des pilotes ou logiciels utilitaires (étape 68). A noter que, si les logiciels utilitaires sont déjà installés, la procédure procède à l'activation du commutateur 46 (étape 70) et passe directement aux étapes suivantes.

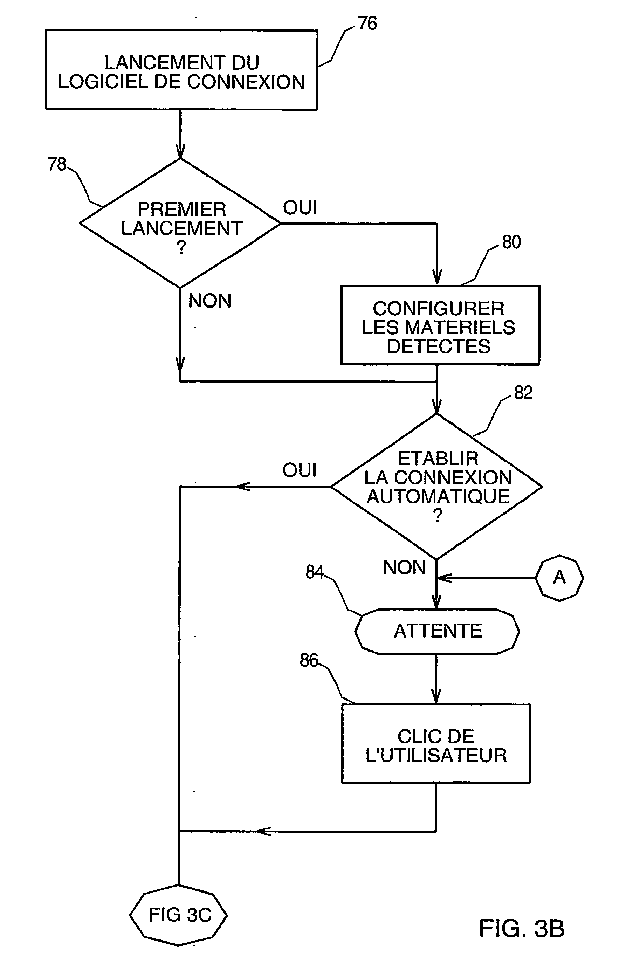

Puis le système d'exploitation vérifie que le logiciel de connexion est installé (étape 72). Si ce n'est pas le cas, c'est-à-dire que c'est une première utilisation ou qu'il s'agit d'une désinstallation ou d'une fausse manipulation, alors le système d'exploitation installe le logiciel de connexion (étape 74) et passe aux étapes suivantes illustrées sur la figure 3B. Par contre, pour la deuxième utilisation du boîtier ou les installations suivantes, et le logiciel de connexion n'a pas été modifié ou supprimé, il a déjà été installé et la procédure passe directement aux étapes suivantes de la figure 3B.

Il y a d'abord lancement du logiciel de connexion (étape 76). Il est déterminé s'il s'agit d'un premier lancement (étape 78). Si c'est le cas, le système d'exploitation de l'ordinateur détecte, initialise et configure les matériels connectés (étape 80). Après que ces opérations ont eu lieu ou s'il ne s'agit pas d'un premier lancement, le logiciel de connexion établit immédiatement et automatiquement la connexion sans intervention de l'utilisateur. Pour ce faire, le programme détermine si le mode de connexion est le mode de connexion automatique (étape 82).

Il faut noter que le mode de connexion normal et par défaut est le mode de connexion automatique. Dans le cas normal, le programme scanne tous les ports de connexion autorisés de l'ordinateur, c'est à dire les ports série, les ports USB, les liens Infrarouge et les liens Bluetooth, afin de trouver sur lequel le boîtier SL 16 est branché. Le profil de connexion est alors instancié en fonction de la connexion trouvée. Ensuite la carte SIM contenue dans le boîtier SL 16 est lue afin de déterminer l'opérateur de téléphonie auprès duquel l'utilisateur dispose d'un abonnement.

Le programme recherche, et utilisera par la suite pour établir la connexion, le profil correspondant à l'utilisateur. Ce « profil de connexion » regroupe des paramètres et réglages connus à l'avance et spécifiques à chaque type de réseau, à chaque utilisateur et caractérisant la connexion.

L'utilisateur peut toutefois modifier le mode de connexion pour que le boîtier SL 16 ne se connecte pas automatiquement dés son insertion dans le port USB de l'ordinateur. Dans ce cas, le programme se met en attente d'un clic de l'utilisateur (étape 84). L'utilisateur peut alors, en cliquant (étape 86), établir la connexion ou lancer un raccourci. Le raccourci établit la connexion et lance l'application associée au raccourci. Ce dernier principe manuel de raccourci s'appelle « OneClick ». La connexion est établie en utilisant, comme pour le mode « tout automatique » par défaut, le profil de connexion adéquat à l'opérateur.

Ce concept de profil de connexion permet à l'utilisateur de n'avoir absolument aucune saisie, ni aucun réglage manuel à effectuer. En effet, sans ce système de profils, l'utilisateur serait obligé de procéder aux différents réglages de la connexion.

Que la commande soit déclenchée par un clic de l'utilisateur sur un raccourci ou que la connexion automatique soit immédiate, le programme détermine ensuite si une routine spécifique d'optimisation du choix de la connexion est activée (étape 88). Si c'est le cas, la connexion est établie en utilisant la routine « SmartConnect » qui appartient au demandeur (étape 90).

La routine spécifique « SmartConnect » permet, lors de l'établissement de la connexion, de choisir automatiquement la meilleure connexion en assurant en même temps une fonction de LCR (Least Cost Routing). La meilleure connexion est la connexion au réseau présentant le meilleur taux de transfert (ou meilleur débit). Si ce réseau n'est pas disponible ou accessible à l'endroit où se trouve l'utilisateur et/ou au moment de l'établissement, alors le réseau présentant le deuxième meilleur débit est utilisé à la place. Si l'utilisation de ce dernier est également impossible, alors le réseau présentant le troisième meilleur débit est utilisé à la place et ainsi de suite jusqu'à ce que toutes les ressources aient été tentées. Le classement peut être établi par le biais d'une liste qui présente par ordre de priorité de connexion les différents réseaux auxquels l'utilisateur, de part les caractéristiques de son abonnement, est en droit de se connecter.

Si le logiciel SmartConnect n'est pas activé, la connexion est établie par défaut (étape 92). A noter que cette connexion peut être établie parce que l'utilisateur a cliqué sur un raccourci désignant une application, auquel cas le lien spécifié par le raccourci est exécuté dès que la connexion est établie, ou parce que l'utilisateur a cliqué sur le bouton « connecter », ce qui lui permet d'établir la connexion sans lancer d'application.

Selon une caractéristique de l'invention, à chaque établissement de connexion pour l'échange de données, le boîtier SL 16 interroge un serveur de mise à jour en lui transmettant une requête selon le principe client-serveur (étape 94). La procédure de mise à jour est alors déclenchée (étape 96) La requête est traitée par le serveur qui indique au boîtier SL les versions des éléments logiciels dont il dispose. Le boîtier SL vérifie si les versions envoyées par le serveur sont supérieures aux versions dont il dispose. Si les versions présentes sur le serveur sont supérieures à celles dont le boîtier SL est actuellement équipé, ce dernier informe l'utilisateur de la disponibilité de mises à jour. A ce stade, rien n'est entrepris par le boîtier SL afin de laisser le choix à l'utilisateur de télécharger ou non, les mises à jours disponibles. Ainsi l'utilisateur ne voit pas son forfait data (ou son abonnement quel qu'en soit le type) utilisé à des fins de mises à jour qu'il pourrait ne pas souhaiter. Si l'utilisateur accepte les mises à jour, le boîtier SL envoie au serveur la requête correspondante pour que le serveur envoie (méthode PUSH) les mises à jour requises.

Bien sûr, le comportement par défaut peut être différent selon les souhaits de l'utilisateur et modifié par ce dernier en fonction de ses préférences. Ainsi, le téléchargement des mises à jour peut être automatique dés qu'elles sont disponibles sans que l'utilisateur n'ait à valider chaque disponibilité. Ou bien la vérification de la disponibilité des mises à jour peut également être bloquée. Cependant, pour permettre à l'opérateur de continuer d'envoyer des mises à jours concernant ses services ou des messages à caractère publicitaire, le cas échéant, le boîtier SL signale sa présence au serveur à chaque connexion. Cela se fait par l'envoi d'une requête donnant au serveur l'adresse IP à laquelle le boîtier SL est joignable. En utilisant un canal personnalisé (canal IP), le serveur peut alors envoyer au boîtier SL les pages de publicités ou d'informations programmées par l'opérateur.

A noter qu'après l'étape éventuelle de mise à jour à l'aide du serveur, le logiciel se met en attente d'autres clics de l'utilisateur pour plusieurs raisons : parce que l'établissement de la connexion a échoué, parce que la connexion, après avoir été établie, a été rompue, ou parce que l'utilisateur veut accéder à la mémoire ou envoyer un SMS. Dans tous ces cas, le processus est rebouclé (A) à l'étape d'attente (étape 84) de la figure 3B.

En plus de l'établissement automatique d'une connexion pour l'échange de données, l'utilisateur peut effectuer un certain nombre d'actions soit après l'établissement automatique immédiate de la connexion, soit lorsqu'il effectue un clic sur le bouton adéquat. Ces actions sont : envoyer ou recevoir des SMS et EMS, gérer les contacts, établir des appels voix, et accéder librement à la mémoire du boîtier SL.

### 1. Envoi et réception de SMS et EMS.

Un bouton permet à l'utilisateur d'accéder à la fenêtre de saisie et lecture des SMS et EMS. Depuis cette fenêtre l'utilisateur peut éditer le texte d'un ou plusieurs SMS ou EMS, désigner le/les destinataires et envoyer le/les SMS ou EMS. Il peut également transférer des SMS ou EMS reçus avec ou sans modification de sa part. Les SMS et EMS peuvent être envoyés à une liste de destinataires. Dans la même fenêtre, les SMS et EMS reçus sont affichés et peuvent consultés et lus par l'utilisateur.

### 2. Gestion et synchronisation des contacts

L'utilisateur peut gérer ses contacts ou les synchroniser avec un logiciel de gestion de contact tel que Outlook Express de Microsoft. Un bouton lui permet d'accéder à la fenêtre de gestion des contacts. Depuis cette fenêtre l'utilisateur peut éditer les contacts, en rajouter, en supprimer, en modifier et les synchroniser avec son gestionnaire de contacts habituel. Il peut également transférer ces contacts depuis le boîtier SL vers l'ordinateur ou de l'ordinateur vers le boîtier SL..

### 3. Appels voix

L'utilisateur en cliquant sur le bouton correspondant, se retrouve dans une fenêtre où il peut saisir le numéro de téléphone à appeler. Le destinataire de l'appel peut également être sélectionnée dans la liste des contacts. De la même manière, l'utilisateur peut accepter ou refuser un appel arrivant par l'intermédiaire de cette fenêtre.

### 4. Libre accès à la mémoire

L'accès à la mémoire se fait par l'interface habituelle fournie par le système d'exploitation. L'utilisateur peut y placer tout élément gérable par son ordinateur et dont la taille permet qu'il soit stockable dans la mémoire du boîtier SL. Dans cette mémoire dont la capacité peut être de 128 mégaoctets ou plus, un certain nombre de mégaoctets sont réservés en zone non réinscriptible (zone protégée en lecture seule) afin d'héberger les applications, pilotes et éléments nécessaires au fonctionnement du boîtier SL.

Afin de préserver l'espace de travail mis à disposition de l'utilisateur sur l'ordinateur (10), ce dernier dispose d'un logiciel permettant la mise en oeuvre d'une fonction de « nettoyage ». Pour ce faire, le programme installe une icône sur le bureau de l'ordinateur (10) lors de la connexion du boîtier. Lorsque la fonction de nettoyage est activée par le clic de cette icône, l'utilisateur peut très facilement et très rapidement désinstaller les logiciels et les fichiers qui avaient été installés pendant les phase de pré-installation des logiciels utilitaires et des mises à jour, de finalisation de l'installation des logiciels utilitaires et de l'installation du logiciel de connexion. De cette façon, il n'est laissé absolument aucune trace des opérations effectuées par l'utilisateur et en particulier de la connexion du boîtier à l'ordinateur 10.

Selon une variante de réalisation, la desinstallation automatique peut être déclenchée manuellement par l'utilisateur, en déconnectant le boîtier de l'ordinateur. De la sorte, l'utilisateur n'a nul besoin de cliquer sur une icône.

## Revendications

1. Dispositif de connexion automatique constitué d'un boîtier (16) dans un système de transmission de données comprenant le réseau Internet (14) ou un réseau équivalent, un premier ordinateur hôte (10) à la disposition d'un premier utilisateur et un deuxième ordinateur hôte (12) à la disposition d'un deuxième utilisateur connecté audit réseau Internet, ledit premier utilisateur désirant échanger des données entre ledit premier ordinateur hôte à sa disposition et ledit deuxième ordinateur hôte connecté au réseau Internet, ledit boîtier comprenant un moyen matériel de connexion tel qu'une prise USB (30) adapté pour être connecté à un moyen matériel de connexion (32) correspondant dudit premier ordinateur hôte et des moyens logiciels de connexion adaptés pour réaliser la connexion automatique dudit premier ordinateur hôte au réseau Internet dès que ledit moyen matériel de connexion du dispositif a été connecté physiquement audit moyen matériel de connexion correspondant dudit premier ordinateur hôte permettant ainsi l'échange de données entre ledit premier ordinateur hôte et ledit deuxième ordinateur hôte par l'intermédiaire d'un dispositif d'interface réseau local, IRL, (20), et lesdits moyens logiciels de connexion comprenant un logiciel de déclaration qui permet audit boîtier d'être reconnu comme étant un CD ROM par le système d'exploitation de l'ordinateur hôte (10) dudit premier utilisateur lorsque ledit moyen matériel de connexion est connecté audit moyen matériel de connexion correspondant dudit premier ordinateur et un fichier auto exécutable « autoruning » qui est immédiatement exécuté par le système d'exploitation dudit ordinateur hôte de manière à installer lesdits moyens logiciels de connexion et les pilotes ou logiciels utilitaires nécessaires à la connexion ;
ledit dispositif de connexion automatique étant **caractérisé en ce que** :
ledit système de transmission de données comprend plusieurs réseaux téléphoniques cellulaires (18) connectés audit réseau Internet,
ledit dispositif d'interface réseau local est un modem pour établir la connexion sans fil dudit boîtier à un desdits réseaux téléphoniques cellulaires, et
lesdits moyens logiciels de connexion comprennent un logiciel de connexion adapté pour établir immédiatement et automatiquement la connexion sans intervention de l'utilisateur, ledit logiciel de connexion étant installé par ledit système d'exploitation dudit premier ordinateur hôte (10) lorsqu'il s'agit d'une première installation desdits moyens logiciels de connexion,
et lesdits moyens logiciels de connexion comprennent en outre une routine spécifique d'optimisation permettant, lors de l'établissement de la connexion, de choisir automatiquement la meilleure connexion en assurant en même temps une fonction de LCR, Least Cost Routing, la meilleure connexion étant la connexion à celui desdits réseaux téléphoniques cellulaires présentant le meilleur taux de transfert.

2. Dispositif selon la revendication 1, dans lequel ledit dispositif d'interface réseau local (20) est intégré dans ledit boîtier (16).

3. Dispositif selon la revendication 2, dans lequel ledit boîtier (16) comprend un concentrateur (38) relié audit moyen matériel de connexion (30), ledit concentrateur étant connecté à une mémoire (40) et comportant une ligne de sortie (44) reliée audit dispositif d'interface réseau local (20) par l'intermédiaire d'un commutateur (46) ne comportant qu'une seule position de sortie (48) reliée audit dispositif d'interface réseau local, et un moyen d'activation (50) relié en permanence à ladite ligne de sortie commandant l'activation dudit commutateur et sa connexion sur ladite position de sortie lorsqu'il reçoit une instruction par l'intermédiaire dudit concentrateur.

4. Dispositif selon l'une des revendications précédentes, comportant des moyens adaptés pour interroger un serveur de mise à jour en lui transmettant une requête, de façon à lancer une procédure de mise à jour des moyens logiciels du dispositif lorsque les versions dont dispose ledit serveur sont plus récentes que les versions du dispositif.

5. Dispositif selon la revendication 4, dans lequel ledit système d'exploitation dudit premier ordinateur configure le boîtier connecté lorsque lesdits moyens logiciels de connexion sont lancés, ceci avant que ledit logiciel de connexion établisse automatiquement la connexion.

6. Dispositif selon la revendication 1, dans lequel lesdits moyens logiciels de connexion comprennent un logiciel spécifique qui permet, lorsque ledit premier utilisateur effectue un seul clic sur une icône de raccourci d'une application déterminée, de lancer ledit logiciel de connexion réalisant l'établissement de la connexion et de lancer ladite application en utilisant la connexion établie.

7. Dispositif selon l'une des revendications précédentes, dans lequel ledit logiciel de connexion utilise un profil de connexion caractérisant la connexion établie et regroupant des paramètres et réglages connus à l'avance et spécifiques à chacun desdits réseaux téléphoniques cellulaires (18) et à chaque utilisateur, ce qui évite ainsi à l'utilisateur d'avoir à effectuer des saisies ou des réglages manuels.

8. Dispositif selon l'une des revendications précédentes, comportant en outre des moyens permettant audit premier utilisateur d'effectuer un certain nombre d'actions après l'établissement de la connexion telles que envoyer ou recevoir des SMS et EMS, gérer les contacts, établir des appels voix, et accéder librement à la mémoire du dispositif.

9. Dispositif selon l'une des revendications 1 à 8, dans lequel une icône est installée sur le bureau dudit ordinateur (10) lors de la connexion dudit boîtier (16) de manière à ce que, par le clic de cette icône, une fonction de nettoyage est mise en oeuvre et permet de désinstaller les logiciels et les fichiers qui avaient été installés par lesdits moyens logiciels de connexion.

10. Dispositif selon l'une des revendications 1 à 8, dans lequel une fonction de nettoyage est mise en oeuvre dans ledit ordinateur (10) lorsque ledit boîtier (16) est déconnecté dudit ordinateur et permet de désinstaller les logiciels et les fichiers qui avaient été installés par lesdits moyens logiciels de connexion.

## Claims

1. Automatic connection device comprising: a box (16) in a data transmission system including the Internet network (14) or an equivalent network, a first host computer (10) being used by a first user and a second host computer (12) being used by a second user connected to said Internet network, said first user wanting to exchange data between said first host computer and said second host computer connected to the Internet network, said box including a hardware connection means such as a USB plug (30) adapted to be connected to a corresponding hardware connection means (32) of said first host computer, and software connection means adapted to automatically connect said first host computer to the Internet network once said hardware connection means has been physically connected to said corresponding hardware connection means of said first host computer thereby enabling an exchange of data between said first host computer and said second host computer through a local network interface LNI device (20), with said software connection means including a declaration software which allows said box to be recognized as a CD ROM by an operating system of the first host computer (10) of said first user when said hardware connection means is connected to said corresponding hardware connection means of said first host computer and a self-executable "autorun.inf" file that is immediately executed by the operating system of said first host computer so as to install said software connection means and the drivers or utility software needed for the connection;
said automatic connection device being **characterized in that**:
said data transmission system comprises several cellular telephone networks (18) connected to said Internet network,
said local network interface device is a modem for establishing the wireless connection of said box to one of said cellular telephone networks, and
said software connection means include a connection software intended to establish the connection immediately and automatically without intervention on the part of the user, said connection software being installed by said operating system of said first host computer (10) when it is a first installation of said software connection means and
said software connection means include a specific optimization routine which makes it possible, when the connection is established, to automatically choose a best connection by ensuring at the same time an LCR (least cost routing) function, with the best connection being the connection to the one of said cellular telephone networks having the best transfer rate.

2. Device according to claim 1, wherein said local network interface (20) device is incorporated into said box (16)

3. Device according to claim 2, wherein said box (16) comprises a concentrator (38) connected to said hardware connection means (30), said concentrator being connected to a storage (40) and including an output line (44) linked to said local network interface device (20) by a switch (46) including a single output position (48) linked to said local network interface device, and an activation means (50) permanently linked to said output line, said activation means controlling the activation of said switch on said output position when receiving an instruction by the intermediary of said concentrator.

4. Device according to any one of the preceding claims, including means adapted to consult an update server by sending the update server a request, so as to run an update procedure of the software means of the device when versions of said server has more recent than versions of the device.

5. Device according to claim 4, wherein said operating system of said first computer configures the connected box when said software connection means are run before said connection software automatically establishes the connection

6. Device according to claim 1, wherein said software connection means include a specific software used when the connection does not take place automatically and which allows, when said first user performs a single click on a shortcut icon of a determined application, to run said connection software that performs an establishment of the connection and to run said application by using the established connection.

7. Device according to any one of the preceding claims, wherein said connection software uses a connection profile that characterizes an established connection and which groups together parameters and settings known in advance and which are specific to each of said cellular telephone networks (18) and to each user, which thereby avoids the respective user having to perform manual key entry or settings.

8. Device according to any one of the preceding claims, further including means for said first user to perform a certain number of actions after the connection has been established, said actions such as sending and receiving SMS and EMS messages, managing contacts, establishing voice calls, and freely accessing a memory of the device.

9. Device according to any one of claims 1 to 8, wherein an icon is installed on a desktop of said first host computer (10) at the time of the connection of said box (16) in a such a way that, by clicking on said icon, a cleaning function is implemented and makes it possible to uninstall the software and files that had been installed by said software connection means.

10. Device according to any one of claims 1 to 8, wherein a cleaning function is implemented in said first host computer (10) when said box (16) is disconnected from said computer and makes it possible to uninstall the software and files that had been installed by said software connection means

## Patentansprüche

1. Automatische Verbindungsvorrichtung, die aus einem Gerät (16) in einem Datenübertragungssystem gebildet ist, das das Internet (14) oder ein äquivalentes Netz, einen ersten Host-Rechner (10), der einem ersten Anwender zur Verfügung steht, und einen zweiten Host-Rechner (12), der einem zweiten Anwender zur Verfügung steht und mit dem Internet verbunden ist, umfasst, wobei der erste Anwender zwischen dem ersten Host-Rechner zu seiner Verfügung und dem zweiten Host-Rechner, der mit dem Internet verbunden ist, einen Datenaustausch vornehmen möchte, wobei das Gerät ein Anschluss-Hardwaremittel wie etwa einen USB-Anschluss (30), das dazu ausgelegt ist, mit einem dem ersten Host-Rechner entsprechenden Anschluss-Hardwaremittel (32) verbunden zu werden, und Anschluss-Softwaremittel umfasst, die dazu ausgelegt sind, die automatische Verbindung des ersten Host-Rechners mit dem Internet auszuführen, sobald das Anschluss-Hardwaremittel der Vorrichtung mit dem entsprechenden Anschluss-Hardwaremittel des ersten Host-Rechners physikalisch verbunden worden ist, um so den Datenaustausch zwischen dem ersten Host-Rechner und dem zweiten Host-Rechner über eine lokale Netzschnittstellenvorrichtung IRL (20) zu ermöglichen, und wobei die Anschluss-Softwaremittel eine Deklarations-Software, die dem Gerät ermöglichen, von dem Betriebssystem des Host-Rechners (10) des ersten Anwenders als eine CD-ROM erkannt zu werden, wenn das Anschluss-Hardwaremittel mit dem entsprechenden Anschluss-Hardwaremittel des ersten Rechners verbunden worden ist, und eine automatisch ausführbare Datei "autorun.inf", die von dem Betriebssystem des Host-Rechners sofort ausgeführt wird, enthalten, derart, dass die Anschluss-Softwaremittel und die Treiber oder die für den Anschluss erforderliche Anwendungssoftware installiert werden;
wobei die automatische Verbindungsvorrichtung **dadurch gekennzeichnet ist, dass**:
das Datenübertragungsnetz mehrere Zellentelefonnetze (18), die mit dem Internet verbunden sind, umfasst,
die lokale Netzschnittstellenvorrichtung ein Modem ist, um die drahtlose Verbindung des Geräts mit einem der Zellentelefonnetze herzustellen, und
die Anschluss-Softwaremittel eine Anschlusssoftware enthalten, die dazu ausgelegt ist, die Verbindung ohne Eingriff des Anwenders sofort und automatisch herzustellen, wobei die Anschlusssoftware durch das Betriebssystem des ersten Host-Rechners (10) installiert wird, wenn es sich um eine Erstinstallation der Anschluss-Softwaremittel handelt, und die Anschluss-Softwaremittel außerdem eine bestimmte Optimierungsroutine enthalten, die bei der Herstellung der Verbindung ermöglichen, automatisch die beste Verbindung zu wählen, wobei gleichzeitig eine LCR- oder Least Cost Routing-Funktion sichergestellt wird, wobei die beste Verbindung die Verbindung mit jenem der Zellentelefonnetze ist, das die beste Übertragungsrate aufweist.

2. Vorrichtung nach Anspruch 1, wobei die lokale Netzschnittstellenvorrichtung (20) in das Gerät (16) integriert ist.

3. Vorrichtung nach Anspruch 2, wobei das Gerät (16) eine Konzentrationseinrichtung (38) umfasst, die mit dem Anschluss-Hardwaremittel (30) verbunden ist, wobei die Konzentrationseinrichtung mit einem Speicher (40) verbunden ist und eine Ausgangsleitung (44) aufweist, die mit der lokalen Netzschnittstellenvorrichtung (20) über eine Umschaltvorrichtung (46) verbunden ist, die nur eine einzige Ausgabestelle (48) besitzt, die mit der lokalen Netzschnittstellenvorrichtung verbunden ist, und ein Aktivierungsmittel (50) aufweist, das ständig mit der Ausgangsleitung verbunden ist und die Aktivierung der Umschaltvorrichtung und ihre Verbindung mit der Ausgabestelle steuert, wenn es über die Konzentrationseinrichtung einen Befehl empfängt.

4. Vorrichtung nach einem der vorhergehenden Ansprüche, die Mittel umfasst, die dazu ausgelegt sind, einen Aktualisierungs-Server abzufragen, indem sie an ihn eine Anforderung senden, derart, dass eine Prozedur für die Aktualisierung der Softwaremittel der Vorrichtung gestartet wird, wenn die Versionen, die der Server hält, jünger sind als die Versionen der Vorrichtung.

5. Vorrichtung nach Anspruch 4, wobei das Betriebssystem des ersten Rechners das angeschlossene Gerät konfiguriert, wenn die Anschluss-Softwaremittel gestartet werden, bevor die Anschlusssoftware automatisch die Verbindung herstellt.

6. Vorrichtung nach Anspruch 1, wobei die Anschluss-Softwaremittel eine bestimmte Software enthalten, die dann, wenn der erste Anwender einen einzigen Klick auf ein Tastenkürzel-Icon einer bestimmten Anwendung vornimmt, den Start der Anschlusssoftware ermöglicht, wodurch die Herstellung der Verbindung erfolgt, und den Start dieser Anwendung ermöglicht, indem die hergestellte Verbindung genutzt wird.

7. Vorrichtung nach einem der vorhergehenden Ansprüche, wobei die Anschlusssoftware ein Anschlussprofil verwendet, das die hergestellte Verbindung charakterisiert und die im Voraus bekannten und für jedes der Zellentelefonnetze (18) und für jeden Anwender spezifischen Parameter und Einstellungen einrichtet, wodurch vermieden wird, dass der Anwender manuelle Erfassungen oder Einstellungen vornehmen muss.

8. Vorrichtung nach einem der vorhergehenden Ansprüche, die außerdem Mittel umfasst, die dem ersten Anwender ermöglichen, nach der Herstellung der Verbindung eine bestimmte Anzahl von Aktionen vorzunehmen, etwa SMS und EMS zu verschicken und zu empfangen, Kontakte zu erzeugen, Sprachanrufe vorzunehmen und beliebig auf den Speicher der Vorrichtung zuzugreifen.

9. Vorrichtung nach einem der Ansprüche 1 bis 8, wobei auf dem Desktop des Rechners (10) beim Anschluss des Geräts (16) ein Icon installiert wird, derart, dass durch einen Klick auf dieses Icon eine Löschfunktion ausgeführt wird, die ermöglicht, die Software und die Dateien, die durch die Anschluss-Softwaremittel installiert worden waren, zu deinstallieren.

10. Vorrichtung nach einem der Ansprüche 1 bis 8, wobei in dem Rechner (10) eine Löschfunktion ausgeführt wird, wenn das Gerät (16) von dem Rechner getrennt wird, die ermöglicht, die Software und die Dateien, die durch die Anschluss-Softwaremittel installiert worden waren, zu deinstallieren.
